# EUROPÄISCHE PATENTANMELDUNG

(11) **EP 4 617 127 A1**
(43) Veröffentlichungstag der Anmeldung: **17.09.2025**
(21) Anmeldenummer: 25162366.6
(22) Anmeldetag: 07.03.2025
(51) Int. Cl.: B60T 13/74, B60T 8/32, B60W 30/10, B60T 8/1755, B60T 8/171, B60T 8/172

(54) **KRAFTFAHRZEUG UND VERFAHREN ZUM ABBREMSEN EINES KRAFTFAHRZEUGS MIT EINEM VEHICLE-MOTION-CONTROL-SYSTEM**

(30) Priorität: 11.03.2024 BE 202405140
(71) Anmelder: thyssenkrupp Presta Aktiengesellschaft, 9492 Eschen (LI); thyssenkrupp AG, 45143 Essen (DE)
(72) Erfinder: Lapis, Leonard, 9466 Sennwald (CH); Szimandl, Barna, 9473 Gams (CH); Erdelyi, Zoltan Szabolcs, 1114 Budapest (HU)
(74) Vertreter: thyssenkrupp Intellectual Property GmbH

(57) **Zusammenfassung**

Die vorliegende Erfindung betrifft ein Verfahren zum Abbremsen eines Kraftfahrzeugs (1), das ein Vehicle-Motion-Control-System (2) und ein Bremssystem (3) mit elektromechanischen Bremsaktuatoren (31) umfasst, wobei jeweils einem Rad (4) des Kraftfahrzeugs (1) einer der elektromechanischen Bremsaktuatoren (31) zugeordnet ist, wobei das Vehicle-Motion-Control-System (2) eine eine Verzögerungsvorgabe umfassende Fahrrichtungsvorgabe, eine Ist-Fahrzeuggeschwindigkeit (61) und eine Ist-Raddrehzahl (71, 72) für jedes Rad (4) des Kraftfahrzeugs (1) empfängt, das Vehicle-Motion-Control-System (2) basierend auf der empfangenen Fahrrichtungsvorgabe und der empfangenen Ist-Fahrzeuggeschwindigkeit (61) eine Referenz-Fahrlinie (RF) für das Kraftfahrzeug (1) bestimmt, das Vehicle-Motion-Control-System (2) eine Soll-Raddrehzahl, die zur Einhaltung der Referenz-Fahrlinie (RF) und zur Umsetzung der Verzögerungsvorgabe erforderlich ist, bestimmt, und das Vehicle-Motion-Control-System (2) die Bremsaktuatoren (31) unter Berücksichtigung der jeweils empfangenen Ist-Raddrehzahl (71, 72) so ansteuert, dass die Ist-Raddrehzahl auf die Soll-Raddrehzahl geregelt wird.

Ferner betrifft die Erfindung ein Kraftfahrzeug (1), das ausgebildet ist, nach einem solchen Verfahren abgebremst zu werden.

## Beschreibung

Die Erfindung betrifft ein Verfahren zum Abbremsen eines Kraftfahrzeugs, das ein Bremssystem mit elektromechanischen Bremsaktuatoren umfasst, wobei jeweils einem Rad des Kraftfahrzeugs einer der elektromechanischen Bremsaktuatoren zugeordnet ist. Des Weiteren betrifft die Erfindung ein Kraftfahrzeug umfassend ein Bremssystem mit elektromechanischen Bremsaktuatoren, wobei jedem Rad des Kraftfahrzeugs jeweils einer der elektromechanischen Bremsaktuatoren und ein Raddrehzahlsensor zur Erfassung einer Ist-Raddrehzahl des Rades zugeordnet ist.

Aus der WO 2021/197554 A1 ist ein Bremssystem mit einer zentralen Steuereinheit und radindividuellen Steuereinheiten bekannt, wobei jedem Rad eines Kraftfahrzeugs eine elektromechanische Radbremse und wenigstens ein Raddrehzahlsensor zugeordnet ist, und wobei ein von der Radbremse aufgebrachtes Verzögerungsmoment durch Regelung der Zuspannkraft der Radbremse geregelt wird. Anhand der mittels der Raddrehzahlsensoren erfassten Raddrehzahl kann dabei ein Radschlupf ermittelte werden und die Radbremse so angesteuert werden, dass der Schlupf innerhalb definierter Grenzen bleibt.

Das Messen einer Bremskraft beziehungsweise einer Zuspannkraft ist dabei nicht unproblematisch, wegen der Temperatur- und Verschleißabhängigkeit der Bremsen. Außerdem sind die entsprechenden Sensoren zur Erfassung der Bremskraft kostenintensiv.

Darüber hinaus ist aus der EP 3 938 260 B1 ein Verfahren für die Regelung eines Lenksystems und eines Differentialbremssystems eines Kraftfahrzeugs bekannt, wobei das Kraftfahrzeug ein Vehicle-Motion-Control-System (kurz auch VMC-System) umfasst.

Vor diesem Hintergrund ist es eine Aufgabe der vorliegenden Erfindung, ein Kraftfahrzeug und ein Verfahren zum Abbremsen eines Kraftfahrzeugs bereitzustellen, die vorteilhafterweise eine alternative Ansteuerung, insbesondere eine kostengünstigere Ansteuerung, der Bremsen ermöglichen, und vorteilhafterweise Sensoren zur Erfassung der Bremskraft entbehrlich machen.

Zur Lösung dieser Aufgabe werden ein Verfahren zum Abbremsen eines Kraftfahrzeugs und ein Kraftfahrzeug gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Abbremsen eines Kraftfahrzeugs vor, wobei das Kraftfahrzeug ein Vehicle-Motion-Control-System und ein Bremssystem mit elektromechanischen Bremsaktuatoren umfasst. Jeweils einem Rad des Kraftfahrzeugs ist dabei einer der elektromechanischen Bremsaktuatoren zugeordnet. Gemäß dem Verfahren empfängt das Vehicle-Motion-Control-System eine eine Verzögerungsvorgabe umfassende Fahrrichtungsvorgabe, insbesondere eine von einem Fahrzeugnutzer oder einem AD-Fahrsystem (AD: autonomous driving) vorgegebene Fahrrichtungsvorgabe, eine Ist-Fahrzeuggeschwindigkeit und eine Ist-Raddrehzahl für jedes Rad des Kraftfahrzeugs. Basierend auf der empfangenen Fahrrichtungsvorgabe und der empfangenen Ist-Fahrzeuggeschwindigkeit bestimmt das Vehicle-Motion-Control-System eine Referenz-Fahrlinie für das Kraftfahrzeug und eine Soll-Raddrehzahl, die zur Einhaltung der Referenz-Fahrlinie und zur Umsetzung der Verzögerungsvorgabe erforderlich ist. Weiter steuert das Vehicle-Motion-Control-System die Bremsaktuatoren unter Berücksichtigung der jeweils empfangenen Ist-Raddrehzahl so an, dass die Ist-Raddrehzahl auf die Soll-Raddrehzahl geregelt wird. Die Bremsaktuatoren werden also vorteilhafterweise durch die Ansteuerung so betätigt, dass die Ist-Raddrehzahl so reduziert wird, dass die Soll-Raddrehzahl erreicht wird. Vorteilhafterweise ist dabei keine Information bezüglich der Bremskraft beziehungsweise der Zuspannkraft der Bremsaktuatoren erforderlich. Insofern kann das Verfahren vorteilhafterweise ohne entsprechende Sensoren zur Erfassung einer Bremskraft beziehungsweise einer Zuspannkraft durchgeführt werden. Dabei kann das Verfahren aber insbesondere auch als Backup-System eines primär Bremskraft-gesteuerten Verfahrens zum Abbremsen eines Kraftfahrzeugs vorgesehen sein, um ein sicheres Abbremsen auch bei einem Ausfall eines oder mehrerer oder aller Bremskraftsensoren bereitzustellen.

Eine besonders vorteilhafte Ausgestaltung des Verfahrens sieht vor, dass das Kraftfahrzeug ein Lenksystem umfasst, bei dem das Lenken der lenkbaren Räder des Lenksystem nach dem Ackermann-Prinzip ausgelegt ist, wobei das Vehicle-Motion-Control-System bei der Bestimmung der Soll-Raddrehzahl die dem Ackermann-Prinzip zugrundeliegende Ackermann-Geometrie nutzt. Die Ackermann-Geometrie bezieht sich auf die geometrische Anordnung der Gestänge im Lenksystem, bei der die Achsen aller Räder als Kreisradien mit einem gemeinsamen Mittelpunkt angeordnet sind. Diese Anordnung wird vorteilhafterweise verwendet, um ein seitliches Durchrutschen der Reifen bei der Kurvenfahrt zu vermeiden.

Vorteilhafterweise kann ein Kraftfahrzeug, welches nach einem erfindungsgemäß ausgebildeten Verfahren abgebremst wird, sicher, stabil und effizient abgebremst werden. Vorteilhafterweise wird dabei in Anlehnung an die Ackermann-Geometrie der seitliche Radschlupf reduziert, insbesondere minimiert, insbesondere indem das Verfahren beziehungsweise der dem Verfahren zugrundeliegende Regelzyklus kontinuierlich betrieben wird. Vorteilhafterweise kann das Fahrzeug gleichzeitig abgebremst und stabilisiert werden, wobei insbesondere die physikalischen Grenzen berücksichtigt werden.

Weiter vorteilhaft berücksichtigt das Vehicle-Motion-Control-System bei der Bestimmung der Soll-Raddrehzahl einen sich aus der Fahrrichtungsvorgabe ergebenden Referenzradschlupf und die empfangen Ist-Fahrzeuggeschwindigkeit, insbesondere unter weiterer Berücksichtigung der Ackermann-Geometrie. Vorteilhafterweise wird hierdurch das Fahrzeug sicherer abgebremst und das Fahrzeug bleibt besser kontrollierbar.

Insbesondere ist vorgesehen, dass das Vehicle-Motion-Control-System für jedes Rad des Kraftfahrzeugs eine Soll-Raddrehzahl bestimmt. Das Vehicle-Motion-Control-System steuert dabei vorteilhafterweise den einem Rad zugeordneten Bremsaktuatoren entsprechend der für das Rad bestimmten Soll-Raddrehzahl an, insbesondere derart, dass jedes Rad die für dieses Rad bestimmte Soll-Raddrehzahl einnimmt. Vorteilhafterweise wird hierdurch das Fahrzeug noch sicherer abgebremst und das Fahrzeug bleibt noch besser kontrollierbar.

Gemäß einer weiteren vorteilhaften Ausgestaltung des Verfahrens erfolgt die Ansteuerung der Bremsaktuatoren ohne Nutzung eines Bremskraftsensors. Insbesondere wird keine ausgeübte Zuspannkraft für die Ansteuerung der Bremsaktuatoren ermittelt und/oder berücksichtigt. Vorteilhafterweise wird hierdurch ein Kostenvorteil erzielt. Darüber hinaus werden die Probleme von Bremskraftsensoren im Hinblick auf deren Abhängigkeit von Temperatur und Verschleiß der Bremsen umgangen.

Das Vehicle-Motion-Control-System umfasst vorteilhafterweise eine Mehrzahl von Aktuatoren, mit denen insbesondere eine Längs-, eine Quer- und/oder eine Vertikaldynamik des Kraftfahrzeugs beeinflusst werden kann. Eine weitere vorteilhafte Ausgestaltung sieht dabei vor, dass die Fahrrichtungsvorgabe eine von einem Steer-by-Wire-Lenksystem des Kraftfahrzeugs erfasste Lenkvorgabe umfasst. Die Lenkvorgabe kann dabei insbesondere ein erfasster Lenkradwinkel sein. Weiter kann die Lenkvorgabe insbesondere ein aufgebrachtes Lenkmoment umfassen. Vorteilhafterweise ist das Steer-by-Wire-Lenksystem dabei als Komponente des Vehicle-Motion-Control-Systems ausgelegt, wodurch vorteilhafterweise ein Übertragen der Lenkvorgabe über eine bereits vorhandene Kommunikationsverbindung erfolgen kann.

Vorteilhafterweise umfasst die Fahrrichtungsvorgabe eine von einem Brake-by-Wire-Bremssystem des Kraftfahrzeugs erfasste Verzögerungsvorgabe. Das Brake-by-Wire-Bremssystem ist dabei vorteilhafterweise als Komponente des Vehicle-Motion-Control-Systems ausgelegt, wodurch vorteilhafterweise ein Übertragen der Verzögerungsvorgabe über eine bereits vorhandene Kommunikationsverbindung erfolgen kann. Vorteilhafterweise kann so auch die Reaktionszeit gesteigert und ein Abbremsen des Kraftfahrzeugs so weiter verbessert werden.

Weiter vorteilhaft umfasst die Fahrrichtungsvorgabe eine von einem Drive-by-Wire-Antriebssystem des Kraftfahrzeugs erfasste Beschleunigungsvorgabe. Die Beschleunigungsvorgabe kann dabei insbesondere auch eine Verzögerungsvorgabe sein, insbesondere wenn ein Fahrer den Fuß von einem Beschleunigungspedal des Kraftfahrzeugs nimmt. Das Drive-by-Wire-Antriebssystem ist dabei vorteilhafterweise als Komponente des Vehicle-Motion-Control-Systems ausgelegt, wodurch vorteilhafterweise ein Übertragen der Beschleunigungsvorgabe über eine bereits vorhandene Kommunikationsverbindung erfolgen kann. Vorteilhafterweise kann so die Reaktionszeit weiter gesteigert und ein Abbremsen des Kraftfahrzeugs noch weiter verbessert werden.

Das des Weiteren zur Lösung der eingangs genannten Aufgabe vorgeschlagene Kraftfahrzeug umfasst ein Vehicle-Motion-Control-System, ein Steer-by-Wire-Lenksystem und ein Bremssystem mit elektromechanischen Bremsaktuatoren, wobei jedem Rad des Kraftfahrzeugs jeweils einer der elektromechanischen Bremsaktuatoren und ein Raddrehzahlsensor zur Erfassung einer Ist-Raddrehzahl des Rades zugeordnet ist. Das Vehicle-Motion-Control-System des Kraftfahrzeugs ist ausgebildet, eine eine Verzögerungsvorgabe umfassende Fahrrichtungsvorgabe, insbesondere eine von einem Fahrzeugnutzer oder von einem AD-Fahrsystem vorgegebene Fahrrichtungsvorgabe, eine Ist-Fahrzeuggeschwindigkeit und eine Ist-Raddrehzahl für jedes Rad des Kraftfahrzeugs zu empfangen. Weiter ist das Vehicle-Motion-Control-System ausgebildet, basierend auf der Fahrrichtungsvorgabe und der Fahrzeuggeschwindigkeit eine Referenz-Fahrlinie für das Kraftfahrzeug und eine Soll-Raddrehzahl, die zur Einhaltung der Referenz-Fahrlinie und zur Umsetzung der Verzögerungsvorgabe erforderlich ist, zu bestimmen, wozu das Vehicle-Motion-Control-System insbesondere eine entsprechend eingerichtete Steuereinheit mit einer Recheneinheit umfasst. Weiter ist das Vehicle-Motion-Control-System, insbesondere die Steuereinheit des Vehicle-Motion-Control-Systems, ausgebildet, eine Ansteuerung der Bremsaktuatoren unter Berücksichtigung der jeweils empfangenen Ist-Raddrehzahl vorzunehmen und dabei die Ist-Raddrehzahl auf die Soll-Raddrehzahl zu regeln. Durch das Hinführen der Ist-Raddrehzahl hin zu der Soll-Raddrehzahl wird das Kraftfahrzeug dabei vorteilhafterweise bei Einhaltung der Referenz-Fahrlinie entsprechend der Verzögerungsvorgabe sicher abgebremst. Insbesondere ergeben sich die im Zusammenhang mit der Beschreibung des vorgeschlagenen Verfahrens beschriebenen Vorteile in entsprechender Weise für das vorgeschlagene Kraftfahrzeug. Die Steuereinheit des Vehicle-Motion-Control-Systems kann insbesondere als zentrale Steuereinheit ausgebildet sein. Es kann aber alternativ auch eine dezentrale Steuereinheit vorgesehen sein, wobei das Vehicle-Motion-Control-System dann eine Mehrzahl von Steuereinheiten umfasst, die insbesondere jeweils einer Aktuatoreinheit zugeordnet sind und diese ansteuern. Dies ermöglicht es vorteilhafterweise, Steuerungen auf Fahrzeugebene freier zu entwickeln und den Fokus auf die Fahrzeugdynamik zu richten. Zudem kann vorteilhafterweise erreicht werden, dass die Bremsaktuatoren eine bessere Leistung erbringen, wenn diese intern von einer zugeordneten Aktuatorsteuereinheit gesteuert werden und nicht durch eine zentrale Steuereinheit. Die Entkopplung fördert somit eine höhere Anpassungsfähigkeit, Leistung und Effizienz des Gesamtsystems und ermöglicht einen modulareren und spezialisierteren Ansatz für die Fahrzeugsteuerung.

Insbesondere ist vorgesehen, dass das Vehicle-Motion-Control-System als Komponenten zur Beeinflussung einer Längs-, einer Quer- und/oder einer Vertikaldynamik des Kraftfahrzeugs ein Steer-by-Wire-Lenksystem und/oder ein Brake-by-Wire-Bremssystem und/oder ein Drive-by-Wire-Antriebssystem umfasst. Weiter insbesondere kann das Vehicle-Motion-Control-System ein aktives Dämpfungssystem umfassen. Vorteilhafterweise stehen dem Vehicle-Motion-Control-System, insbesondere einer zentralen Steuereinheit des Vehicle-Motion-Control-Systems, eine Vielzahl von den Fahrzustand des Kraftfahrzeugs beschreibenden Fahrzustandsparametern zur Verfügung. So kann vorteilhafterweise verbessert die Referenz-Fahrlinie für das Kraftfahrzeug bestimmt und deren Einhaltung durch das Kraftfahrzeug geregelt werden.

Besonders vorteilhaft ist vorgesehen, dass das Kraftfahrzeug derart ausgebildet ist, dass die lenkbaren Räder des Kraftfahrzeugs gemäß einer Achsschenkellenkung nach dem Ackermann-Prinzip ausgebildet sind. Das Vehicle-Motion-Control-System, insbesondere die Steuereinheit des Vehicle-Motion-Control-Systems, ist dabei vorteilhafterweise weiter ausgebildet, für die Bestimmung der Soll-Raddrehzahl die dem Ackermann-Prinzip zugrundeliegende Ackermann-Geometrie zu nutzen. Die Einhaltung der Ackermann-Geometrie ermöglicht vorteilhafterweise verbessert die seitliche Kontrolle des Fahrzeugs und zwingt es insbesondere zu einem idealen Verhalten, bei dem der seitliche Schlupf der Reifen minimal ist. Vorteilhafterweise ist das Vehicle-Motion-Control-System weiter ausgebildet, jeden Bremsaktuator einzeln anzusteuern, wodurch sich das Fahrzeug noch sicherer abbremsen lässt.

Weiter vorteilhaft umfasst das Kraftfahrzeug keine Sensoren zur Erfassung einer Bremskraft und/oder einer Zuspannkraft. Hierdurch können Kosten eingespart werden. Es kann aber als Ausgestaltungsvariante insbesondere auch vorgesehen sein, dass das Kraftfahrzeug mittels dem entsprechend eingerichteten Vehicle-Motion-Control-System das Kraftfahrzeug über die Raddrehzahl-Regelung abzubremsen und zusätzlich auch durch eine Bremskraftregelung das Kraftfahrzeug abzubremsen, wobei durch die beiden Ausgestaltungen eine Redundanz für den Fall einer Funktionsbeeinträchtigung einer der Ausgestaltungen realisiert ist.

Insbesondere ist vorgesehen, dass das Kraftfahrzeug ausgebildet ist, gemäß einem erfindungsgemäß ausgebildeten Verfahren abgebremst zu werden. Insbesondere ist das Vehicle-Motion-Control-System des Kraftfahrzeugs, weiter insbesondere eine Steuereinheit des Vehicle-Motion-Control-Systems des Kraftfahrzeugs, ausgebildet, die gemäß dem Verfahren von einem Vehicle-Motion-Control-System auszuführenden Verfahrensschritte auszuführen.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer stark vereinfachten Seitenansicht ein Ausführungsbeispiel für ein erfindungsgemäß ausgebildetes Kraftfahrzeug; und
- Fig. 2: in einer stark vereinfachten Draufsicht das Kraftfahrzeug aus Fig. 1, das gemäß einer Ausgestaltungsvariante eines erfindungsgemäß ausgebildeten Verfahrens abgebremst wird.

In den verschiedenen Figuren sind gleiche Teile in der Regel mit den gleichen Bezugszeichen versehen und werden daher mitunter auch jeweils nur im Zusammenhang mit einer der Figuren erläutert.

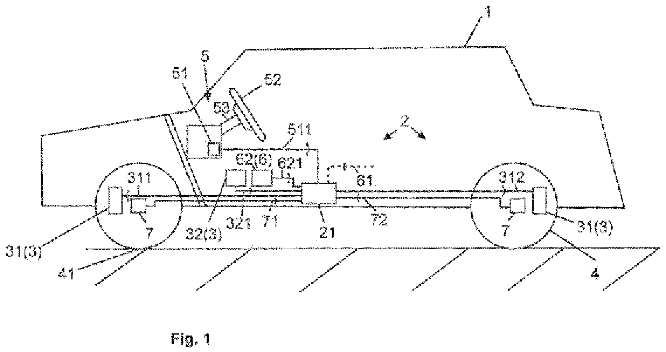

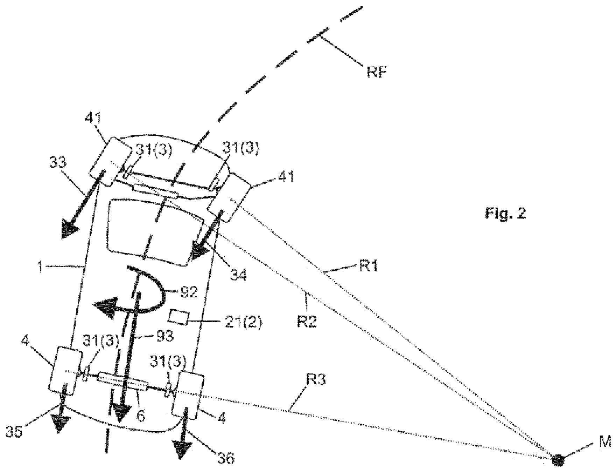

In Fig. 1 ist ein Ausführungsbeispiel für ein erfindungsgemäß ausgebildetes Kraftfahrzeug 1 schematisch dargestellt, das in diesem Fall ein zweispuriger PKW (PKW: Personenkraftwagen) ist. Fig. 2 zeigt das Kraftfahrzeug 1 in einer schematischen Draufsicht, wobei das Kraftfahrzeug 1 entsprechend einem Ausführungsbeispiel für ein erfindungsgemäß ausgebildetes Verfahren abgebremst wird. Wie in Fig. 2 schematisch angedeutet, sind die lenkbaren Räder 41 des Kraftfahrzeugs 1 über eine Achsschenkellenkung lenkbar ausgebildet, wobei die Achsschenkellenkung gemäß dem Ackermann-Prinzip ausgebildet ist, sodass die Ackermann-Geometrie, die sich auf die geometrische Anordnung der Gestänge im Lenksystem bezieht, anwendbar ist. Gemäß der Ackermann-Geometrie sind die Achsen aller Räder 4, 41 des Kraftfahrzeugs 1 als Kreisradien R1, R2, R3 mit einem gemeinsamen Mittelpunkt M, wie in Fig. 2 skizziert, angeordnet. Aufgrund der Ackermann-Geometrie wird verhindert, dass die Reifen der Räder 4, 41 beim Durchfahren einer Kurve zur Seite rutschen, wodurch der seitliche Schlupf der Reifen stark reduziert ist.

Das Kraftfahrzeug 1 weist ein Vehicle-Motion-Control-System 2 auf, mit dem die Fahrdynamik des Kraftfahrzeugs 1, insbesondere die Fahrdynamik in Längs- und Querrichtung des Kraftfahrzeugs 1, beeinflusst werden kann. Das Vehicle-Motion-Control-System 2 umfasst dabei ein Steer-by-Wire-Lenksystem 5, ein Brake-by-Wire-Bremssystem 3 und ein Drive-by-Wire-Antriebsystem 6. Das Steer-by-Wire-Lenksystem 5, das Brake-by-Wire-Bremssystem 3 und das Drive-by-Wire-Antriebssystem 6 sind dabei zur Übertragung von Signalen mit einer zentralen elektronischen Steuereinheit 21 (ECU; ECU: Electronic Control Unit) des Vehicle-Motion-Control-Systems 2 verbunden.

Das Steer-by-Wire-Lenksystem 5 umfasst eine drehfest an einer Lenkwelle 53 angeordnete Lenkhandhabe 52 über die ein Fahrzeugnutzer einen Lenkbefehl vorgeben kann. Ein Feedback-Aktuator 51 des Steer-by-Wire-Lenksystems 5, der ausgebildet ist, ein Lenkwiderstandsmoment auf die Lenkwelle 53 aufzubringen, umfasst dabei die Sensorik, insbesondere einen Lenkwinkelsensor, die ausgebildet ist, den von einem Fahrzeugnutzer vorgegebenen Lenkbefehl als Lenkvorgabe 511 zu erfassen und an die Steuereinheit 21 des Vehicle-Motion-Control-Systems 2 zu übertragen.

Das Brake-by-Wire-Bremssystem 3 des Kraftfahrzeugs 1 umfasst vier elektromechanische Bremsaktuatoren 31, bei denen insbesondere über einen Stellmotor Bremsbacken in Eingriff mit einer Bremsscheibe gebracht werden können. Die Bremsaktuatoren 31 sind dabei jeweils einem Rad 4, 41 des Kraftfahrzeugs 1 zugeordnet, wobei jeder der Bremsaktuatoren 31 individuell von der Steuereinheit 21 des Vehicle-Motion-Control-Systems 2 angesteuert werden können. Den Rädern 4, 41 des Kraftfahrzeugs 1 ist zudem jeweils ein Raddrehzahlsensor 7, der zur Erfassung einer Ist-Raddrehzahl 71, 72 des jeweiligen Rades 4, 41 ausgebildet ist, zugeordnet. Die Ist-Raddrehzahl 71, 72 eines jeden Rades 4, 41 wird dabei während des Betriebs des Kraftfahrzeugs 1 permanent an die Steuereinheit 21 des Vehicle-Motion-Control-Systems 2 übertragen. In diesem Ausführungsbeispiel weist das Kraftfahrzeug 1, insbesondere das Bremssystem 3 des Kraftfahrzeugs 1, keine Sensoren zur Erfassung einer von einem der Bremsaktuatoren 31 ausgeübten Bremskraft beziehungsweise Zuspannkraft auf.

Eine Bremsbefehl kann ein Fahrzeugnutzer in dem gezeigten Ausführungsbeispiel über ein Bremspedal 32 des Bremssystems 3 vorgeben, wobei das Betätigen des Bremspedals sensorisch erfasst wird, insbesondere in Bezug auf die aufgebrachte Betätigungskraft und den Betätigungsweg, und die sensorisch erfassten Signale als Verzögerungsvorgabe 321 an die Steuereinheit 21 des Vehicle-Motion-Control-Systems 2 übertragen werden.

Das Drive-by-Wire-Antriebssystem 6 kann insbesondere wenigstens einen Elektromotor zum Antreiben der Antriebsräder des Kraftfahrzeugs 1 aufweisen. Ein Fahrzeugnutzer kann dabei über ein Beschleunigungspedal 62, historisch bedingt aus als Gaspedal bezeichnet, einen Befehl bezüglich der Fahrgeschwindigkeit des Kraftfahrzeugs 1 vorgeben. Das Betätigen des Beschleunigungspedals wird dabei sensorisch erfasst, insbesondere in Bezug auf den Betätigungsweg beziehungsweise die Veränderung des Betätigungsweges. Die hierbei sensorisch erfassten Signale werden dann als Beschleunigungsvorgabe 621 an die Steuereinheit 21 des Vehicle-Motion-Control-Systems 2 übertragen, die dann die wenigstens eine Antriebseinheit des Drive-by-Wire-Antriebssystems 6 zur Umsetzung der Beschleunigungsvorgabe 621 entsprechend ansteuert. Die jeweils aktuelle Ist-Fahrzeuggeschwindigkeit 61 des Kraftfahrzeugs 1 wird ebenfalls permanent an die Steuereinheit 21 des Vehicle-Motion-Control-Systems 2 übertragen.

Insbesondere kann gemäß einer hier nicht dargestellten Ausgestaltungsvariante auch vorgesehen sein, dass das Kraftfahrzeug 1 nicht von einem Fahrzeugnutzer, sondern von einem AD-Fahrsystem gesteuert wird, wobei in dem Fall das AD-Fahrsystem die Informationen bezüglich einer Lenkvorgabe, einer Verzögerungsvorgabe und einer Beschleunigungsvorgabe an die Steuereinheit 21 des Vehicle-Motion-Control-Systems 2 überträgt. Des Weiteren kann in einer hier ebenfalls nicht dargestellten Ausgestaltungsvariante die Steuereinheit 21 des Vehicle-Motion-Control-Systems 2 dezentral ausgebildet sein. In dem Fall kann das Vehicle-Motion-Control-System 2 insbesondere den Aktuatoreinheiten 31 jeweils zugeordnete Steuereinheiten umfassen, über die das Vehicle-Motion-Control-System 2 insbesondere die Bremsaktuatoren ansteuern kann, insbesondere gemäß einer entsprechenden Vorgabe durch das Vehicle-Motion-Control-System 2.

Jedenfalls ist in diesem Ausführungsbeispiel und in der nicht dargestellten Ausgestaltungsvariante, gemäß der das Fahrzeug von einem AD-Fahrsystem gesteuert wird, die Steuereinheit 21 des Vehicle-Motion-Control-Systems 2 ausgebildet, eine Fahrrichtungsvorgabe, die eine Lenkvorgabe 511, eine Verzögerungsvorgabe 321 und eine Beschleunigungsvorgabe 621 umfasst, sowie eine aktuelle Ist- Fahrzeuggeschwindigkeit 61 des Kraftfahrzeugs 1 und eine Ist-Raddrehzahl 71, 72 für jedes Rad 4, 41 des Kraftfahrzeugs 1 zu empfangen. Auf der Grundlage der empfangenen Fahrrichtungsvorgabe und der Ist-Fahrzeuggeschwindigkeit 61 bestimmt die Steuereinheit 21 des Vehicle-Motion-Control-Systems 2 permanent eine Referenz-Fahrlinie RF für das Kraftfahrzeug 1, der das Kraftfahrzeug 1 gemäß der empfangenen Fahrrichtungsvorgabe folgen soll. Des Weiteren bestimmt die Steuereinheit 21 des Vehicle-Motion-Control-Systems 2 für jedes der Räder 4, 41 des Kraftfahrzeugs 1 eine Soll-Raddrehzahl, die das jeweilige Rad 4, 41 annehmen muss, damit das Kraftfahrzeug 1 der Referenz-Fahrlinie RF weiter folgt und damit die empfangene Verzögerungsvorgabe 321 in eine entsprechende Verzögerung des Kraftfahrzeugs umgesetzt wird.

Bei der Bestimmung der Soll-Raddrehzahl durch das Vehicle-Motion-Control-System 2 wird dabei die aufgrund der Auslegung der gelenkten Räder geltende, dem Ackermann-Prinzip zugrundeliegende Ackermann-Geometrie angewendet. Außerdem wird bei der Bestimmung der Soll-Raddrehzahl ein sich aus der Fahrrichtungsvorgabe bei zugrunde gelegter Ackermann-Geometrie ergebender Referenzradschlupf sowie die aktuelle Ist-Fahrzeuggeschwindigkeit 61 berücksichtigt. Die von der Steuereinheit 21 des Vehicle-Motion-Control-Systems 2 bestimmte Referenz-Fahrlinie RF wird von der Steuereinheit 21 vorteilhafterweise in eine daraus resultierende Ackermann-Geometrie (Festlegung des Mittelpunktes M und der Kreisradien R1, R2, R3; vgl. Fig. 2) überführt, wobei dann vorteilhafterweise unter Berücksichtigung dieser resultierenden Ackermann-Geometrie die Soll-Radgeschwindigkeit für jedes der Räder 4, 41 bestimmt wird.

Die Steuereinheit 21 des Vehicle-Motion-Control-Systems 2 steuert dann die jeweiligen Bremsaktuatoren 31 mit auf Basis der bestimmten Soll-Raddrehzahlen und unter Berücksichtigung der tatsächlichen Ist-Raddrehzahlen 71, 72 generierten Ansteuerungssignalen 311, 312 an. Der durch die Ansteuerungssignale 311, 312 hervorgerufene Bremseingriff der Bremsaktuatoren 31 wird dabei von der Steuereinheit 21 des Vehicle-Motion-Control-Systems 2 so geregelt, dass die jeweilige Ist-Raddrehzahl 71, 72 eines jeweiligen Rades 4, 41 auf die für dieses Rad 4, 41 bestimmte Soll-Raddrehzahl reduziert wird. Der Bremseingriff an dem jeweiligen Rad 4, 41 ist dabei in Fig. 2 symbolisch durch die Pfeile 33, 34, 35, 36 dargestellt und erfolgt für jedes Rad 4, 41 individuell in unterschiedlicher Stärke in Abhängigkeit von der für das jeweilige Rad 4, 41 bestimmten Soll-Raddrehzahl. Das sich durch die Bremseingriffe ergebende Abbremsen des Kraftfahrzeug 1 führt dabei zu der in Fig. 2 symbolisch mit dem Pfeil 93 symbolisch dargestellten Verzögerung und dem in Fig. 2 symbolisch dargestellten Giermoment 92.

Beispielsweise kann vorgesehen sein, dass das Kraftfahrzeug 1 in einem Radius von 600 m (m: Meter) mit 50 km/h (km: Kilometer; h: Stunde) nach rechts abbiegt. Die Hinterräder 4 des Kraftfahrzeugs 1 haben die gleiche Geschwindigkeit, also die gleiche Raddrehzahl. Die Vorderräder 41 werden nach rechts gelenkt, sodass der Mittelpunkt des Kraftfahrzeugs 1 auf dem 600 m-Radius liegt. Das rechte Vorderrad 41rollt auf einem kleineren Radius R1, als das äußere Vorderrad 41, das auf einem größeren Radius R2 rollt. Aufgrund der Ackermann-Geometrie kann nun die Geschwindigkeit des inneren (rechten) und des äußeren (linken) Rades 41 an der Vorderachse bestimmt werden. Wenn ein Fahrzeugnutzer beziehungsweise ein AD-Fahrsystem die Fahrtrichtungsvorgabe (Radius und Zielgeschwindigkeit des Fahrzeugs) und somit die Referenzfahrlinie RF ändert, müssen die Raddrehzahlen der Ackermann-Geometrie folgen, damit der seitliche Radschlupf minimiert und die Seitenstabilität maximiert werden kann.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Kraftfahrzeug
- 2: Vehicle-Motion-Control-System
- 21: Steuereinheit des Vehicle-Motion-Control-Systems
- 3: Bremssystem
- 31: elektromechanischer Bremsaktuator
- 311, 312: Ansteuerungssignal für Bremsaktuator (31)
- 32: Bremspedal
- 321: Verzögerungsvorgabe
- 33, 34, 35, 36: Bremseingriff
- 4: Rad
- 41: lenkbares Rad
- 5: Steer-by-Wire-Lenksystem
- 51: Feedback-Aktuator
- 511: Lenkvorgabe
- 52: Lenkhandhabe
- 53: Lenkwelle
- 6: Antriebssystem
- 61: Ist-Fahrzeuggeschwindigkeit
- 62: Beschleunigungspedal
- 621: Beschleunigungsvorgabe
- 7: Raddrehzahlsensor
- 71, 72: Raddrehzahl
- 92: Giermoment des Kraftfahrzeugs (1)
- 93: Verzögerung des Kraftfahrzeugs (1)
- RF: Referenz-Fahrlinie
- R1, R2, R3: Kreisradius
- M: Mittelpunkt für die Kreisradien (R1, R2, R3)

## Patentansprüche

1. Verfahren zum Abbremsen eines Kraftfahrzeugs (1), das ein Vehicle-Motion-Control-System (2) und ein Bremssystem (3) mit elektromechanischen Bremsaktuatoren (31) umfasst, wobei jeweils einem Rad (4) des Kraftfahrzeugs (1) einer der elektromechanischen Bremsaktuatoren (31) zugeordnet ist, wobei
das Vehicle-Motion-Control-System (2) eine eine Verzögerungsvorgabe umfassende Fahrrichtungsvorgabe, eine Ist-Fahrzeuggeschwindigkeit (61) und eine Ist-Raddrehzahl (71, 72) für jedes Rad (4) des Kraftfahrzeugs (1) empfängt,
das Vehicle-Motion-Control-System (2) basierend auf der empfangenen Fahrrichtungsvorgabe und der empfangenen Ist-Fahrzeuggeschwindigkeit (61) eine Referenz-Fahrlinie (RF) für das Kraftfahrzeug (1) bestimmt,
das Vehicle-Motion-Control-System (2) eine Soll-Raddrehzahl, die zur Einhaltung der Referenz-Fahrlinie (RF) und zur Umsetzung der Verzögerungsvorgabe erforderlich ist, bestimmt,
und das Vehicle-Motion-Control-System (2) die Bremsaktuatoren (31) unter Berücksichtigung der jeweils empfangenen Ist-Raddrehzahl (71, 72) so ansteuert, dass die Ist-Raddrehzahl (71, 72) auf die Soll-Raddrehzahl geregelt wird.

2. Verfahren nach Anspruch 1, **dadurch gekennzeichnet, dass** das Kraftfahrzeug (1) ein Lenksystem (5) umfasst, bei dem das Lenken der lenkbaren Räder (41) des Lenksystem (5) nach dem Ackermann-Prinzip ausgelegt ist, wobei das Vehicle-Motion-Control-System (2) bei der Bestimmung der Soll-Raddrehzahl die dem Ackermann-Prinzip zugrundeliegende Ackermann-Geometrie nutzt.

3. Verfahren nach Anspruch 1 oder Anspruch 2, **dadurch gekennzeichnet, dass** das Vehicle-Motion-Control-System (2) bei der Bestimmung der Soll-Raddrehzahl einen sich aus der Fahrrichtungsvorgabe ergebenden Referenzradschlupf und die empfangen Ist-Fahrzeuggeschwindigkeit (61) berücksichtigt.

4. Verfahren nach einem der vorstehenden Ansprüche, **dadurch gekennzeichnet, dass** das Vehicle-Motion-Control-System (2) für jedes Rad (4) des Kraftfahrzeugs (1) eine Soll-Raddrehzahl bestimmt und das Vehicle-Motion-Control-System (2) den einem Rad (4) zugeordneten Bremsaktuator (31) entsprechend der für das Rad (4) bestimmten Soll-Raddrehzahl ansteuert.

5. Verfahren nach einem der vorstehenden Ansprüche, **dadurch gekennzeichnet, dass** die Ansteuerung der Bremsaktuatoren (31) ohne Nutzung eines Bremskraftsensors erfolgt.

6. Verfahren nach einem der vorstehenden Ansprüche, **dadurch gekennzeichnet, dass** die Fahrrichtungsvorgabe eine von einem Steer-by-Wire-Lenksystem (5) des Kraftfahrzeugs (1) erfasste Lenkvorgabe (511) umfasst.

7. Verfahren nach einem der vorstehenden Ansprüche, **dadurch gekennzeichnet, dass** die Fahrrichtungsvorgabe eine von einem Brake-by-Wire-Bremssystem (3) des Kraftfahrzeugs (1) erfasste Verzögerungsvorgabe (321) umfasst.

8. Verfahren nach einem der vorstehenden Ansprüche, **dadurch gekennzeichnet, dass** die Fahrrichtungsvorgabe eine von einem Drive-by-Wire-Antriebssystem (6) des Kraftfahrzeugs (1) erfasste Beschleunigungsvorgabe (621) umfasst.

9. Kraftfahrzeug (1) umfassend ein Vehicle-Motion-Control-System (2), ein Steer-by-Wire-Lenksystem (5) und ein Bremssystem (3) mit elektromechanischen Bremsaktuatoren (31), wobei jedem Rad (4) des Kraftfahrzeugs (1) jeweils einer der elektromechanischen Bremsaktuatoren (31) und ein Raddrehzahlsensor (7) zur Erfassung einer Ist-Raddrehzahl des Rades (4) zugeordnet ist, wobei das Vehicle-Motion-Control-System (2) ausgebildet ist, eine eine Verzögerungsvorgabe umfassende Fahrrichtungsvorgabe, eine Ist-Fahrzeuggeschwindigkeit (61) und eine Ist-Raddrehzahl (71, 72) für jedes Rad (4) des Kraftfahrzeugs (1) zu empfangen,
basierend auf der Fahrrichtungsvorgabe und der Ist-Fahrzeuggeschwindigkeit (61) eine Referenz-Fahrlinie (RF) für das Kraftfahrzeug (1) und eine Soll-Raddrehzahl, die zur Einhaltung der Referenz-Fahrlinie (RF) und zur Umsetzung der Verzögerungsvorgabe erforderlich ist, zu bestimmen,
und eine Ansteuerung der Bremsaktuatoren (31) unter Berücksichtigung der jeweils empfangenen Ist-Raddrehzahl (71, 72) vorzunehmen und dabei die Ist-Raddrehzahl (71, 72) auf die Soll-Raddrehzahl zu regeln.

10. Kraftfahrzeug (1) nach Anspruch 9, **dadurch gekennzeichnet, dass** die lenkbaren Räder (41) des Kraftfahrzeugs (1) gemäß einer Achsschenkellenkung nach dem Ackermann-Prinzip ausgebildet sind, und das Vehicle-Motion-Control-System (2) weiter ausgebildet ist, für die Bestimmung der Soll-Raddrehzahl die dem Ackermann-Prinzip zugrundeliegende Ackermann-Geometrie zu nutzen.

11. Kraftfahrzeug (1) nach Anspruch 9 oder Anspruch 10, **dadurch gekennzeichnet, dass** das Vehicle-Motion-Control-System (2) weiter ausgebildet ist, jeden Bremsaktuator (31) einzeln anzusteuern.

12. Kraftfahrzeug (1) nach einem der Ansprüche 9 bis 11, **dadurch gekennzeichnet, dass** das Kraftfahrzeug (1) keine Sensoren zur Erfassung einer Bremskraft und/oder einer Zuspannkraft umfasst.

13. Kraftfahrzeug (1) nach einem der Ansprüche 9 bis 12, **dadurch gekennzeichnet, dass** das Kraftfahrzeug (1) ausgebildet ist, gemäß einem Verfahren nach einem der Ansprüche 1 bis 8 abgebremst zu werden.
